# EUROPEAN PATENT SPECIFICATION

(11) **EP 3 550 632 B1**
(45) Date of publication and mention of the grant of the patent: **20.10.2021**
(21) Application number: 18165918.6
(22) Date of filing: 05.04.2018
(51) Int. Cl.: H01M 50/231, H01M 50/229, H01M 50/227, H01M 50/224, H01M 50/233, H01M 50/249

(54) **UPPER COVERING PART FORMING A LID FOR BATTERY HOUSING FOR AN ELECTRIC VEHICLE**
DECKELBILDENDES OBERES ABDECKTEIL FÜR EIN BATTERIEGEHÄUSE FÜR EIN ELEKTROFAHRZEUG
PARTIE DE RECOUVREMENT SUPÉRIEURE FORMANT UN COUVERCLE POUR BOÎTIER DE BATTERIE D'UN VÉHICULE ÉLECTRIQUE

(43) Date of publication of application: 09.10.2019
(73) Proprietor: Autoneum Management AG, 8406 Winterthur (CH)
(72) Inventor: Junghans, Wilfried, 8500 Frauenfeld (CH); SCHÜRMANN, Jeremias, 8005 Zürich (CH)

(56) References cited:
- GB-A- 2 519 067
- JP-A- 2011 233 320
- US-A1- 2012 100 414
- US-A1- 2016 021 797

## Description

### Technical Field

The present invention is related to a novel lid or cover for housing suitable to comprise multiple electrical power cells in electrically driven automotive vehicles, in particularly for housing placed underneath the vehicle.

### Background Art

In general, a battery pack housing assembly used in an electric vehicle typically comprises a battery pack consisting of a power cell or power cells, a battery management system, a blower, an upper cover, a lower housing, structure reinforcement members, and is mounted underneath the car to the bottom of the vehicle body.

Housing comprising multiple of electrical power cells in motor vehicles are usually necessary to protect the electrical power cells arranged inside from outside influences (JP 2011 233320 A). Vice-versa the housing is suitable as well, to protect any persons sitting in the car from any influences originated from the electrical power cells inside the housing (US 2012/100414 A1). Such housing comprises a lower part and an upper part that fit together to create a hollow space, whereby the lower part is containing the battery cells and the upper part is forming the lid.

The lower part of the housing and the reinforcement members as well as the upper part may be made of a steel enclosure to endure the load of the battery. Due to the thick steel needed for stiffness and durability the battery pack housing assembly is heavy. The battery pack housing assembly is typically mounted on a vehicle floor panel, and thus requires chipping resistance, water tightness and corrosion resistance.

The object of the present invention is to obtain a novel light weight upper housing part or lid structure that fits with a lower housing part to form a battery housing and that is able to shield electromagnetic waves.

### Summary of invention

Said object is achieved by an upper covering part forming a lid for battery housing, by a battery housing comprising the novel covering part and by a method of producing such a lid.

In particular by an upper covering part forming a lid for battery housing for an electric vehicle comprising at least a thermoplastic carrier shaped to form the covering lid whereby the outer surface of the covering lid not facing the battery pack is coated on the outer surface of the covering lid with a conductive paint comprising conductive metal or conductive metal-coated particles, and whereby the assembly of the thermoplastic carrier and of the coating has an electromagnetic shielding effectiveness of at least 50dB, preferably at least 60dB, at RF frequencies between 1kHz and 1.5GHz according to ASTM D4935-10.

In particular by an upper covering part comprising at least a thermoplastic carrier layer shaped to form the covering lid, and a conductive resinous coat comprising conductive metal or metal-coated particles, and whereby the assembly of the thermoplastic carrier and of the coating has an electromagnetic shielding effectiveness of at least 50dB, preferably at least 60dB, at RF frequencies between 1kHz and 1.5GHz according to ASTM D4935-10 on the outer surface of the covering lid.

The conductive metal or metal-coated particles are preferably silver, silver-plated aluminium, silver-plated copper, silver-plated glass, nickel, zinc, nickel-graphite, copper, steel or aluminium or combinations thereof. Most preferably are silver or silver coated particles or nickel or nickel coated particles.

The carrier layer comprises one of polyamide, polycarbonate, acrylonitrile butadiene styrene (ABS), polyolefin, such as polypropylene (PP) or polyethylene (PE), or polyester, such as polyethylene terephthalate (PET).

The carrier is preferably filled with fillers, such as glass fibers or reinforcement fibers to further enhance the stiffness of the part and or the crash resistance of the material. The carrier might instead also comprise a metal wire net or grid to enhance the stiffness and increase the shielding.

Furthermore, the carrier layer may comprise a composite material where fillers, fibers or textiles are added as reinforcement to the carrier material. These reinforcements may be composed of glass, carbon, aramid, or other synthetic fibers as well as natural fibers to improve.

The thermoplastic carrier material might further comprise a flame retardant additive.

Preferably the carrier layer comprises thermoplastic material from a recycled or reclaimed source either as part of the matrix of the material or as filler content.

The carrier layer is preferably made of thermoplastic sheet material that is formed in a thermoforming and/or vacuum forming process, to obtain the final shape.

The carrier layer can comprise additional design features like ribs to further enhance the stiffness of the part or it might have shapes to provide space for additional appliances like cooling ducts, wires and cables.

It is important that the conductive coating is provided at the surface that is not facing the battery pack or power cells; any flaking of the conductive coating might interfere with the batteries or the electric connection of the batteries.

The conductive metal or metal-coated particles comprised in the conductive resinous coating are preferably silver, silver-plated aluminium, silver-plated copper, silver-plated glass, nickel, zinc, nickel-graphite, steel or aluminium or combinations thereof. Most preferably, are silver or silver coated particles or nickel or nickel coated particles. The electroconductivity is dependent on the type of particles chosen as well as the density of the particles within the layer, and the thickness of the layer. Finer particles are preferred.

Preferably, the part containing the conductive coating has at least an electromagnetic shielding of 50dB, preferably at least 60dB, at RF frequencies between 1kHz and 1.5GHz according to ASTM 4935-10. Preferably, the electromagnetic shielding is between 60 and 100 dB at RF frequencies between 1kHz and 1.5GHz.

Preferably, the coating is based on an acrylic binder resin binding the particles together to form an even coat or film on the outer surface of the carrier layer forming the upper covering part after drying and or curing of the coat. For instance, the coat may be applied in the form of a sprayed paint. The thus formed coated layer on the carrier surface is durable, smooth and has both cohesive and adhesive strength towards the carrier surface.

The thickness of at least the conductive layer is between 20 and 150µm, preferably between 25 and 125µm, more preferably between 25 and 100µm.

For instance a conductive coating comprising silver plated copper particles in an acrylic based coating with a density of 0.6 (g/cm³) and a thickness of 50µm is having a shielding of 60-65dB at RF frequencies between 1kHz and 1.5GHz. A comparable coating with a density of 1.3 (g/cm³) is having the same shielding potential already at 25-30µm. The thickness of the coating can be varied to increase the shielding on those areas that are facing the passenger and or sensitive electric equipment. Preferably, the coating is having a variable thickness over the surface of the upper cover according to the invention.

Covers for battery boxes might be complex shaped, to incorporate any coverage for appliances and channels needed for the functioning of the batteries within the box and stored with the battery packs inside the battery box. This might also include cooling systems and wiring. This can mean that the cover is shaped including flat areas as well as complex 3D shaped areas. It might be beneficial to combine laminated conductive foils or films with the conductive coating according to the invention. The carrier layer can be moulded directly with the conductive film or foil only placed in the flatter areas where the film or foil is not stretched enough to fail its conductive function, while the conductive coating is applied at least in the areas not covered by the foil. Preferably the coating is at least partially overlapping with the foil so that the conductive surface is substantially intact, as each breach of the conductive surface will increase the electromagnetic radiation that can pass the part and reach the passengers and or interfere with other electrical appliances.

Preferably at least one of a metal foil preferably copper, aluminium, nickel or steel foil is used, more preferably an aluminium foil is used. Preferably the foil thickness is between 20 and 100µm . By combining conductive foil with a conductive coating, the foil can be restricted to the flatter areas and therefore is less stretched during the production of the part. Hence thinner foils can be used, saving material and weight.

Alternatively, a conductive thermoplastic film or foil comprising electroconductive particles can be used.

The carrier layer may be treated to further improve the resistance of the coating to delamination or flaking. For instance, an undercoating may be applied to the surface of the thermoplastic carrier before the application of the coating. As an undercoating preferably one is used that lightly etches the surface of the carrier to enhance the binding of the conductive layer to the carrier layer.

To increase the abrasion resistance an additional protective layer may be applied on top of the conductive coating. This may enhance the resistance of the surface layer against scratching and chipping. The protective coating may be a coating of polyurethane, either clear or containing colour pigments or dyes.

The undercoating layer and or the protective layer preferably comprise of a thermoplastic or thermoset coating layer of up to 3mm, preferably less than 1mm.

The undercoating layer and or the protective coating layer may be one of a polyurethane formulation, preferably a polyurethane elastomer, a cured epoxy resin formulation, a polyolefin, preferably polypropylene or polyethylene primer or an acrylic resin formulation or a combination of these.

For instance, a branched polyurethane coating made of a polyurethane formulation comprising a branched polyurethane with a molecular weight between branch points between 1000 and 13000 might be used as a protective and or undercoating layer. Alternatively, a polyurethane elastomeric layer might be used.

Also an epoxy resin coating composition might be used for instance one comprising an epoxy resin containing in the molecule at least 2 epoxy groups and a curing agent composition.

It may also be a self-curable polyepoxy resin composition for instance comprising a polyepoxy resin having an epoxy equivalence of greater than one, a polyamide, salicylic acid and N-(3 aminopropyl)piperazine.

Or any other composition that enhances abrasion resistance and or the hardness of the single layers and/or the laminated layers.

In a separate embodiment the carrier layer is vacuum formed with at least locally a metal foil layer, advantageously in flat areas. For instance, foils like aluminum, steel, copper, chromium or silver or combined foils using more than 1 type of the ones mentioned can be used. In a second step at least in the areas not covered by the metal foil the thus formed part is coated with a conductive paint comprising at least silver particles and or silver-plated copper particles, and whereby the coated surface has an electromagnetic shielding of at least 50dB, preferably at least 60dB, at RF frequencies between 1kHz and 1.5GHz according to ASTM 4935-10.

Upper covering parts or lids with a carrier layer and laminated thereto a metal foil layer are known in the art, however covering parts can have very complex shapes whereby the metal might have cracks and or unwanted folds in the surface, a combination of using foils in the flat surface areas and a coating according to the invention in combination can ensure that no uncovered areas will exist. Uncovered areas will diminish the effect of the electro-magnetic shielding.

### Description of embodiments

Figure 1 schematic drawing of a vehicle
Figure 2 schematic drawing of a cover for a battery housing
Figure 2A Cross section through the material layers forming the cover.
Figure 3 is showing an example for a cover for battery housing.

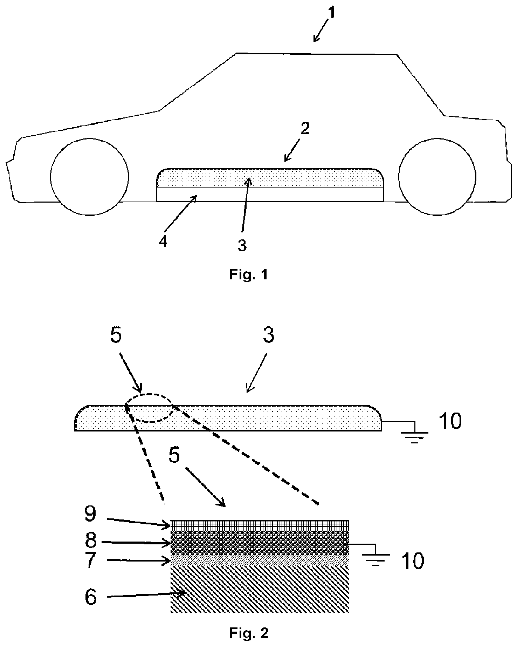

Figure 1 is a schematic drawing of a vehicle comprising at least a battery box or housing 2. The battery box or housing 2 comprises the power cell or cells (not shown) that may be needed for a battery electric vehicle (BEV) or a hybrid electric vehicle (HEV) for instance for electric cars and small people transporting units.

The battery box or housing 2 comprises an upper covering part forming a lid for battery housing 3 according to the invention and a lower part 4 containing the power cell or cells. Both fit together to form an enclosed space for the power cell or cells. Preferably the box is sealed with a sealing at the area of contact between the upper part and the lower part to prevent dirt and water from entering the box and get in contact with the content in particularly the power cells or the connections between the power cells.

Preferably, the seal is made of an electro conductive silicone comprising electro conductive particles like for instance silver or silver coated particles or nickel or nickel coated particles, for instance nickel coated graphite.

Figure 2 is showing the upper covering part forming a lid for battery housing or box in more detail. Figure 2A is showing a cross section 5 through the material forming the upper covering part. The upper covering part comprises at least a thermoplastic carrier 6 shaped to form the covering lid. The cover is shaped such that it is able to cover at least the open space in the lower part comprising the power cell or cells. Whereby also contours to cover other appliances might be given, for instance to cover additional cooling systems or connections. The battery cover might comprise any ribbing to further increase the stiffness of the cover and or to increase the impact durability.

The outside surface of the upper part forming the covering lid not facing and or not in direct contact with the power cells is coated with a conductive paint 8 according to the invention, comprising at least metal or metal based particles, for instance one of silver particles or silver-plated copper particles and whereby the coated surface has an attenuation of at least 50dB, preferably at least 60 dB, at RF frequencies between 1kHz and 1.5GHz according to ASTM 4935-10.

An undercoating 7 may be applied on the thermoplastic carrier before the application of the coating to further enhance resistance of the coating to external influences like water, sand or salt.

A protective layer 9 may be applied on top of the conductive coating to further enhance the resistance of the surface layer against scratching and chipping. The protective coating may be a coating of polyurethane, either clear or containing colour pigments or dyes.

Preferably at least the conductive layer has an earth connection to achieve maximum shielding performance. For instance, by using a shielding tape or wire, preferably copper, placed within the coating during the application or the earth connection is first applied and over sprayed with the conductive paint. For a functional earth connection, it is important that the wire or tape is also conductive and in direct contact with the conductive layer.

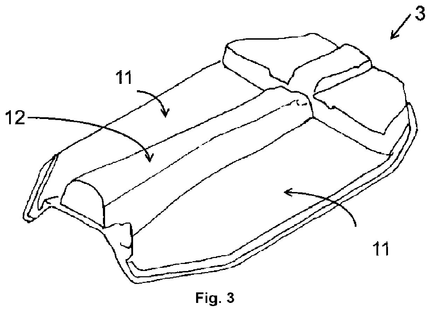

Figure 3 is showing an example of a cover lid for battery housing with a more complex shape, having a channel on top that may accommodate an integrated cooling system or electric appliances in the battery housing or box. Due to the complex shape it might be advantageous to combine the conductive coating according to the invention in areas that are complex shaped and conductive foil or film in areas that are flat shaped. It might also be an option to cover most of the surface with conductive foil or film while a coat is applied over the entire surface to cover any cracks or gaps in the metal foil cover. For instance, in figure 3 the flat areas indicated with 11 might be covered with a metal sheet, for instance a copper or aluminium metal foil, preferably with a thickness of between 20 and 100 µ m, while the other areas including the tunnel 12 can be covered with the conductive coating according to the invention.

Example of an upper covering part forming a lid for battery housing according to the invention can be a vacuum formed cover, for instance like figure 3 made of polycarbonate with at least a conductive coating comprising silver plated copper particles in an acrylic based coating with a density of 0.6 (g/cm³) and a thickness of 50µm over the outer surface of the part and having a shielding of 60-65dB at RF frequencies between 1kHz and 1.5GHz.

Upper covering parts forming a lid for battery housing made according to the invention provide not only a good electromagnetic shielding but also an improved resistance to water, salt and dirt coming from the road during driving. Furthermore, in comparison to state of the art covers they have fewer layers and are maintenance free.

## Claims

1. Upper covering part forming a lid for battery housing for an electric vehicle comprising at least a thermoplastic carrier shaped to form the covering lid **characterized in that** the outer surface of the covering lid not facing the battery pack is coated with a conductive paint comprising conductive metal or conductive metal-coated particles, and whereby the assembly of the thermoplastic carrier and of the coating has an electromagnetic shielding effectiveness of at least 50dB, preferably at least 60dB, at RF frequencies between 1kHz and 1.5GHz according to ASTM D4935-10 and whereby the conductive coating layer has a thickness of between 20 and 150µm.

2. Upper covering part forming a lid for battery housing according to claim 1 whereby the conductive metal or metal-coated particles are at least one of silver, silver-plated aluminium, silver-plated copper, silver-plated glass, nickel, zinc, nickel-graphite, copper, steel, aluminium or combinations thereof,

3. Upper covering part forming a lid for battery housing according to claim 1 or 2, whereby the paint is an acrylic based paint or a silicone based coating.

4. Upper covering part forming a lid for battery housing according to one of the preceding claims whereby the thermoplastic carrier comprises one of polycarbonate, polyolefin, preferably polypropylene or polyethylene, polyester, preferably polyethylene terephthalate (PET), polyamide or polylactic acid.

5. Upper covering part forming of a lid for battery housing according to one of the preceding claims whereby the carrier material is reinforced with fillers, fibers or textiles to create a composite part. Preferably, these reinforcement fillers, fibers or textiles are comprised of natural or synthetic material, preferably glass, carbon, aramid.

6. Upper covering part forming a lid for battery housing according to one of the preceding claims further comprising areas covered with an electroconductive foil whereby the conductive coating is at least applied in the areas not covered with the foil, preferably the coating is at least partially overlapping with the foil, preferably the conductive foil is one of a metal foil such as aluminium, copper or steel, or a thermoplastic conductive foil.

7. Upper covering part forming a lid for battery housing according to one of the preceding claims further comprising an undercoating between at least the conductive coating and the carrier and/or a protective coating on at least the conductive coating.

8. Upper covering part forming a lid for battery housing according to one of the preceding claims further comprising means for grounding the conductive layer.

9. Battery box or housing for power cell or cells for a battery electric vehicle comprising a lower part and an upper part that fit together to create a hollow space, whereby the upper covering part is forming a lid according to one of claims 1 to 9.

10. Battery box or housing according to claim 10 further comprising a conductive seal between the upper covering part forming the lid and the lower part.

11. Method of making an upper covering part forming a lid for battery housing according to one of the previous claims comprising at least the steps of thermoforming the cover, and subsequently spray coating the outer surface with a conductive paint comprising at least one of silver particles, nickel particles or silver-plated copper particles or a mixture thereof, such that the conductive coating layer has a thickness of between 20 and 150µm and drying and or curing the paint, such that the assembly of the thermoplastic carrier and of the coating has an electromagnetic shielding effectiveness of at least 50dB, preferably at least 60dB, at RF frequencies between 1kHz and 1.5GHz according to ASTM D4935-10.

12. Method according to claim 12, further comprising the step of laminating at least partially on the outer surface a conductive film or foil.

13. Method according to claim 13 whereby the conductive film or foil is at least partially covered with the conductive paint to obtain a substantially closed conductive layer over the entire outer surface of the cover.

## Patentansprüche

1. Obere Abdeckung, das einen Deckel für ein Batteriegehäuse für ein Elektrofahrzeug bildet, das mindestens einen thermoplastischer Träger umfasst, der geformt ist, um den obere Abdeckungl zu bilden, **dadurch gekennzeichnet, dass** die Außenoberfläche der obere Abdeckung, die dem Batteriesatz nicht zugewandt ist, mit einem leitenden Anstrich beschichtet ist, der leitendes Metall oder leitende metallbeschichtete Teilchen umfasst, und wobei die Anordnung des thermoplastischer Trägers und der Beschichtung eine elektromagnetische Abschirmungseffektivität von mindestens 50 dB, bevorzugt mindestens 60 dB, bei HF-Frequenzen zwischen 1 kHz und 1,5 GHz gemäß ASTM D4935-10 aufweist, und wobei die leitende Beschichtungsschicht eine Dicke zwischen 20 und 150 µm aufweist.

2. Obere Abdeckung, das einen Deckel für ein Batteriegehäuse nach Anspruch 1 bildet, wobei das leitende Metall oder die metallbeschichteten Teilchen mindestens eines von Silber, versilbertem Aluminium, versilbertem Kupfer, versilbertem Glas, Nickel, Zink, Nickel-Graphit, Kupfer, Stahl, Aluminium oder Kombinationen davon sind.

3. Obere Abdeckung, das einen Deckel für Batteriegehäuse nach Anspruch 1 oder 2 bildet, wobei der Anstrich ein auf Acryl basierender Anstrich oder eine auf Silikon basierende Beschichtung ist.

4. Obere Abdeckung, das einen Deckel für Batteriegehäuse nach einem der vorstehenden Ansprüche bildet, wobei der Thermoplastischer Träger eines von Polycarbonat, Polyolefin, bevorzugt Polypropylen oder Polyethylen, Polyester, bevorzugt Polyethylenterephthalat (PET), Polyamid oder Polymilchsäure umfasst.

5. Obere Abdeckung, das einen Deckel für Batteriegehäuse nach einem der vorstehenden Ansprüche bildet, und wobei das Trägermaterial mit Füllstoffen, Fasern oder Textilien verstärkt ist, um ein Verbundmaterialteil zu schaffen, bevorzugt bestehen diese Verstärkungsfüllstoffe, Fasern oder Textilien aus natürlichem oder künstlichem Material, bevorzugt Glas, Carbon, Aramid.

6. Obere Abdeckung, das einen Deckel für Batteriegehäuse nach einem der vorstehenden Ansprüche bildet, das weiter Flächen umfasst, die mit einer elektrisch leitenden Folie abgedeckt sind, wobei die leitende Beschichtung mindestens in den Flächen, die nicht mit der Folie abgedeckt sind, aufgebracht ist, bevorzugt die Beschichtung mindestens teilweise die Folie überlappt, bevorzugt die leitende Folie eine einer Metallfolie, wie eine Aluminium-, Kupfer- oder Stahl- oder eine leitende Thermoplast-Folie ist.

7. Obere Abdeckung, das einen Deckel für Batteriegehäuse nach einem der vorstehenden Ansprüche bildet, dass weiter eine Unterbeschichtung zwischen der mindestens eine leitende Beschichtung und dem Träger und/oder eine Schutzschicht mindestens auf der leitenden Beschichtung umfasst.

8. Obere Abdeckung, das einen Deckel für Batteriegehäuse nach einem der vorstehenden Ansprüche bildet, dass weiter Mittel zum Schleifen der leitenden Schicht umfasst.

9. Batteriekasten oder -gehäuse für Energiezelle oder Zellen für ein batterieelektrisches Fahrzeug, der/das ein unteres Teil und ein oberes Teil umfasst, die zusammenpassen, um einen Hohlraum zu bilden, wobei das obere Abdeckungsteil einen Deckel nach einem der Ansprüche 1 bis 9 bildet.

10. Batteriekasten oder -gehäuse nach Anspruch 10, der/das weiter eine leitende Dichtung zwischen dem oberen Abdeckungsteil, das den Deckel bildet, und dem unteren Teil umfasst.

11. Verfahren zum Herstellen eines oberen Abdeckungsteil, das einen Deckel für Batteriegehäuse nach einem der vorstehenden Ansprüche bildet, das mindestens die Schritte des Wärmeformens der Abdeckung und anschließend Sprühbeschichten der Außenoberfläche mit einem leitenden Anstrich umfasst, der mindestens eines von Silberteilchen, Nickelteilchen oder versilberten Kupferteilchen oder eine Mischung davon umfasst, so dass die leitende Beschichtungsschicht eine Dicke zwischen 20 und 150 µm aufweist, und Trocknen und/oder Aushärten des Anstrichs, so dass die Anordnung des thermoplastischer Trägers und der Beschichtung eine elektromagnetische Abschirmungseffektivität von mindestens 50 dB, bevorzugt mindestens 60 dB, bei HF-Frequenzen zwischen 1 kHz und 1,5 GHz gemäß ASTM D4935-10 aufweist.

12. Verfahren nach Anspruch 12, das weiter den Schritt des Laminierens mindestens teilweise auf der Außenoberfläche eines leitenden Films oder einer leitenden Folie umfasst

13. Verfahren nach Anspruch 13, wobei der leitende Film oder die leitende Folie mindestens teilweise mit dem leitenden Anstrich abgedeckt ist, um eine im Wesentlichen geschlossene leitende Schicht über der gesamten Außenoberfläche der Abdeckung zu erhalten.

## Revendications

1. Partie de recouvrement supérieure formant un couvercle pour un boîtier de batterie pour un véhicule électrique comprenant au moins un support thermoplastique conçu pour former le couvercle de recouvrement, **caractérisée en ce que** la surface extérieure du couvercle de recouvrement ne faisant pas face au bloc-batterie est revêtue d'une peinture conductrice comprenant des particules de métal conducteur ou revêtues de métal conducteur, et selon laquelle l'ensemble du support thermoplastique et du revêtement présente une efficacité de blindage électromagnétique d'au moins 50 dB, de préférence d'au moins 60 dB, à des fréquences RF entre 1 kHz et 1,5 GHz selon la norme ASTM D4935-10, et selon laquelle la couche de revêtement conductrice présente une épaisseur entre 20 et 150 µm.

2. Partie de recouvrement supérieure formant un couvercle pour un boîtier de batterie selon la revendication 1, selon laquelle les particules de métal ou revêtues de métal conducteur sont au moins un parmi l'argent, l'aluminium plaqué d'argent, le cuivre plaqué d'argent, le verre plaqué d'argent, le nickel, le zinc, le nickel-graphite, le cuivre, l'acier, l'aluminium ou des combinaisons de ceux-ci.

3. Partie de recouvrement supérieure formant un couvercle pour un boîtier de batterie selon la revendication 1 ou 2, selon laquelle la peinture est une peinture à base acrylique ou un revêtement à base de silicone.

4. Partie de recouvrement supérieure formant un couvercle pour un boîtier de batterie selon l'une quelconque des revendications précédentes, selon laquelle le support thermoplastique comprend un parmi un polycarbonate, une polyoléfine, de préférence un polypropylène ou un polyéthylène, un polyester, de préférence un polyéthylène téréphtalate (PET), un polyamide ou un acide polylactique.

5. Partie de recouvrement supérieure formant un couvercle pour un boîtier de batterie selon l'une quelconque des revendications précédentes, selon laquelle le matériau de support est renforcé avec des charges, des fibres ou des textiles pour créer une partie composite, de préférence, ces charges, fibres ou textiles de renfort sont constitués de matière naturelle ou synthétique, de préférence du verre, du carbone, de l'aramide.

6. Partie de recouvrement supérieure formant un couvercle pour un boîtier de batterie selon l'une quelconque des revendications précédentes, comprenant en outre des zones recouvertes d'une feuille électroconductrice, selon laquelle le revêtement conducteur est au moins appliqué dans les zones non recouvertes de la feuille, de préférence le revêtement chevauche au moins partiellement la feuille, de préférence la feuille conductrice est l'une d'une feuille métallique telle que d'aluminium, de cuivre ou d'acier, ou d'une feuille conductrice thermoplastique.

7. Partie de recouvrement supérieure formant un couvercle pour un boîtier de batterie selon l'une quelconque des revendications précédentes, comprenant en outre un sous-revêtement entre au moins le revêtement conducteur et le support et/ou un revêtement protecteur sur au moins le revêtement conducteur.

8. Partie de recouvrement supérieure formant un couvercle pour un boîtier de batterie selon l'une quelconque des revendications précédentes, comprenant en outre un moyen pour mettre à la masse la couche conductrice.

9. Boîtier ou coffre de batterie pour une ou plusieurs cellules de puissance pour un véhicule électrique à batterie comprenant une partie inférieure et une partie supérieure qui s'adaptent l'une à l'autre pour créer un espace creux, selon lequel la partie de recouvrement supérieure forme un couvercle selon l'une quelconque des revendications 1 à 9.

10. Boîtier ou coffre de batterie selon la revendication 10, comprenant en outre un joint conducteur entre la partie de recouvrement supérieure formant le couvercle et la partie inférieure.

11. Procédé de fabrication d'une partie de recouvrement supérieure formant un couvercle pour un boîtier de batterie selon l'une quelconque des revendications précédentes, comprenant au moins les étapes consistant à thermoformer le couvercle, puis à revêtir par pulvérisation la surface extérieure avec une peinture conductrice comprenant au moins certaines parmi des particules d'argent, des particules de nickel ou des particules de cuivre plaquées d'argent ou un mélange de celles-ci, de telle sorte que la couche de revêtement conductrice présente une épaisseur comprise entre 20 et 150 µm et à sécher et/ou à durcir la peinture, de telle sorte que l'assemblage du support thermoplastique et du revêtement présente une efficacité de blindage électromagnétique d'au moins 50 dB, de préférence d'au moins 60 dB, à des fréquences RF comprises entre 1 kHz et 1,5 GHz selon la norme ASTM D4935-10.

12. Procédé selon la revendication 12, comprenant en outre l'étape consistant à stratifier au moins partiellement sur la surface extérieure un film conducteur ou une feuille conductrice.

13. Procédé selon la revendication 13, selon lequel le film conducteur ou la feuille conductrice est au moins partiellement recouvert(e) de la peinture conductrice pour obtenir une couche conductrice sensiblement fermée sur toute la surface extérieure du couvercle.
